Europäisches Patentamt

European Patent Office

Office européen des brevets

(19)

(11) Publication number: **0 223 423 B1**

# EUROPEAN PATENT SPECIFICATION

(45) Date of publication of patent specification: **02.05.91**   (51) Int. Cl.⁵: **H04N 5/781, G11B 27/00**

(21) Application number: **86308134.5**

(22) Date of filing: **20.10.86**

(54) Signal recording apparatus and methods.

(30) Priority: **21.10.85 JP 235014/85**
**25.10.85 JP 238697/85**

(43) Date of publication of application:
**27.05.87 Bulletin 87/22**

(45) Publication of the grant of the patent:
**02.05.91 Bulletin 91/18**

(84) Designated Contracting States:
**DE FR GB NL**

(56) References cited:
**DE-A- 3 038 397**
**DE-A- 3 129 920**
**US-A- 4 065 794**
**US-A- 4 065 795**

(73) Proprietor: **SONY CORPORATION**
**7-35 Kitashinagawa 6-Chome Shinagawa-ku**
**Tokyo 141(JP)**

(72) Inventor: **Ueno, Katuhiko Sony Corporation**
**Patents Division**
**6-7-35 Kitashinagawa Shinagawa-ku**
**Tokyo 141(JP)**
Inventor: **Sasaki, Takayuki Sony Corporation**
**Patents Division**
**6-7-35 Kitashinagawa Shinagawa-ku**
**Tokyo 141(JP)**
Inventor: **Iijima, Kouji Sony Corporation Pat-**
**ents Division**
**6-7-35 Kitashinagawa Shinagawa-ku**
**Tokyo 141(JP)**
Inventor: **Arai, Masaaki Sony Corporation Pat-**
**ents Division**
**6-7-35 Kitashinagawa Shinagawa-ku**
**Tokyo 141(JP)**

(74) Representative: **Cotter, Ivan John et al**
**D. YOUNG & CO. 10 Staple Inn**
**London WC1V 7RD(GB)**

## Description

This invention relates to signal recording apparatus and methods.

A so-called electronic still camera for recording a video signal representing a still image or picture, and in which a voice signal can be recorded simultaneously with the video signal representing the still image or picture, is disclosed in our European Patent Application Publication No. EP-A-0 180 477 which was published on 7th May 1986 and therefore falls within the terms of EPC Article 54(3). On a disc recorded on such electronic still camera, video signal tracks and voice or audio signal tracks are formed in co-existence with one another. The recording states of audio signals may differ. Some are terminated in one track while others extend over plural tracks. Also, video signals corresponding to the audio signals may or may not exist. Information concerning these recording states is recorded in a control data recording area in the audio signal tracks. When a series of audio signals is recorded over plural tracks, the leading track number or address and the next following track number or address are recorded in the control data recording area. When corresponding video signals exist, the number or address of the video track is recorded in the control data recording area.

It should be noted that the recording format of the video signal tracks is not designed to keep a record in the video data of address data concerning the track of the corresponding audio signals. Therefore, upon reproducing the disc on which video and audio tracks exist together, when a video track on the disc is reproduced first by a reproducing head, it may be impossible to reproduce corresponding audio signals simultaneously with the video signals, even if these audio signals are present on the disc. Similar inconveniences are caused when a plurality of sets of audio signals extend over plural tracks and a given sequence or a train of voice sounds accompanying a still image or scene is terminated to enter into the next sequence.

UK Patent Application Publication No. GB-A-2 060 207 (which corresponds to German Patent Application Publication No. DE-A-3 038 397) discloses apparatus for reproducing (playing) a standard composite video signal from a video disc having a spiral track arranged thereon. In order to detect and correct tracking errors on reproduction, each field of the video signal recorded on the track comprises an information signal indicating a field number in a sequence. The field numbers are detected and stored on reproduction and compared with a predicted field number established by a counting operation. If, for example due to a "locked groove" defect resulting in a stylus of the player repeatedly tracking the same convolution of the spiral track, the detected field number is not within a predetermined range based on the predicted field number, a stylus "kicker" is operative to move the stylus to the correct position.

GB-A-2 082 796 (which corresponds to DE-A-3 129 920) discloses a video disc recording and reproducing system. When recording, first and second audio signals are applied as right and left stereophonic signals to a frequency modulator, a video signal is applied to another frequency modulator, and the outputs of the two modulators are mixed together to provide a conventional composite video/audio signal which is recorded in conventional manner on a track on the disc. A control signal can be selectively recorded instead of the second audio signal. The control signal is detected and stored on reproduction and can be selectively employed to control the reproduction sequence of the recorded composite video/audio signal.

US Patent No. US-A-4 065 794 discloses an audio-video signal recording and reproducing system in which both a plurality of video signal fields and audio signals are recored on respective tracks of a disc, the audio signals being recorded in a time-compressed manner. Video change signals, indicating the time for displaying video fields corresponding to the audio fields (that is, indicating correspondence between the audio signals and video signal fields), are recorded together with the time-compressed audio signals.

According to a first aspect of the invention there is provided signal recording apparatus capable of recording, on recording tracks of a rotary recording medium, both a plurality of video signal fields and a plurality of audio signals, the apparatus including means for time-compressing the audio signals, means for generating control code data indicating correspondence between the audio signals and the video signal fields, and means for recording the control code data together with the associated timecompressed audio data, the recording apparatus being characterised in that:

(a) the apparatus is capable of recording the video signal fields and the audio signals on a recording medium having recording tracks arranged concentrically with respect to one another such that each video signal field is recorded on a respective one of the tracks and each audio signal is recorded on one or on a plurality of the tracks other than those on which the video signal fields are recorded;

(b) the means for generating the control code data, for controlling a reproduction sequence of audio signals recorded on the tracks, is operative to generate control code data including: address data that indicates a track number and address on the rotary recording medium; discriminating data that indicates whether a track being reproduced is a track forming part of a said plurality of the tracks on which an audio signal is recorded and, if so, indicating a track number of the leading track of the plurality and a track number of the next following track of the plurality; and corresponding track number data that indicates a track number of a track on which a video signal field, corresponding to the audio signal being reproduced, is recorded;

(c) table memory means is provided for storing the control code data including said address data, said discriminating data and said corresponding track number data;

(d) means is provided for recording the control code data in predetermined portions of the respective tracks on which the audio signals are recorded, together with the associated time-compressed audio data; and

(e) means is provided for recording the control code data stored in the table memory means on a control track at a predetermined location on the rotary recording medium.

According to a second aspect of the invention there is provided a method of recording, on recording tracks of a rotary recording medium, both a plurality of video signal fields and a plurality of audio signals, the method comprising time-compressing the audio signals, generating control code data indicating correspondence between the audio signals and the video signal fields, and recording the control code date together with the associated time-compressed audio data, the method being characterised by:

(a) recording the video signal fields and the audio signals such that each video signal field is recorded on a respective one of the tracks and each audio signal is recorded on one or on a plurality of the tracks other than those on which the video signal fields are recorded;

(b) generating the control code data, for controlling a reproduction sequence of audio signals recorded on the tracks, such that the control code data includes: address data that indicates a track number and address on the rotary recording medium; discriminating data that indicates whether a track being reproduced is a track forming part of a said plurality of the tracks on which an audio signal is recorded and, if so, indicating a track number of the leading track of the plurality and a track number of the next following track of the plurality; and corresponding track number data that indicates a track number of a track on which a video signal field, corresponding to the audio signal being reproduced, is recorded;

(c) storing the control code data including said address data, said discriminating data and said corresponding track number data;

(d) recording the control code data in predetermined portions of the respective tracks on which the audio signals are recorded, together with the associated time-compressed audio data; and

(e) recording the stored control code data on a control track on the rotary recording medium.

In such a recording apparatus and method, control code data concerning all the tracks on the recording medium (e.g. disc), including the above-mentioned track numbers, can be densely recorded on the control track on the recording medium in such a fashion that, during reproduction, the control track is reproduced and a series of audio signals or corresponding video signals can optionally be selected to permit smooth and prompt reproduction of the information recorded on the medium.

When reproducing a recording medium bearing the above-mentioned information signals, all the recording tracks on the recording medium are scanned for reproducing at least the information signals, the reproduced information signals can then be written into corresponding table positions in a digital table memory, and a subsequent process of reproduction of the audio and video tracks can thereafter be controlled on the basis of the written information signals, so that editing of the recorded information is facilitated.

In this manner, track number data recorded on a predetermined track is read prior to reproduction so that track management during reproduction is facilitated and reproduction or editing of a sequence comprising a series of audio signals or corresponding video signals can be performed smoothly and promptly.

Further aspects of the invention (in particular, a signal reproducing apparatus and method and a rotary recording medium) are defined in the claims.

The invention will now be further described, by way of illustrative and non-limiting example, with reference to the accompanying drawings, in which:

Figure 1 is a diagrammatic block diagram showing a recording apparatus embodying the present invention for recording video and audio signals in recording tracks on a disc;

Figure 2 shows a recording format for one sector of audio signals;

Figure 3 is a diagrammatic plan view showing audio and control tracks on the disc;

Figures 4A, 4B and 4C show different examples of possible organisation of table data within a table memory of the apparatus of Figure 1;

Figure 5 diagrammatically shows an example of the contents of the recording tracks on the disc;

Figure 6 shows an example of the recording format on the control track;

Figure 7 is a block diagram showing an example of how a reproducing block shown in Figure 1 may be constructed; and
Figure 8 is a block diagram showing an example of reproducing apparatus for reproducing a disc recorded by the recording apparatus of Figure 1.

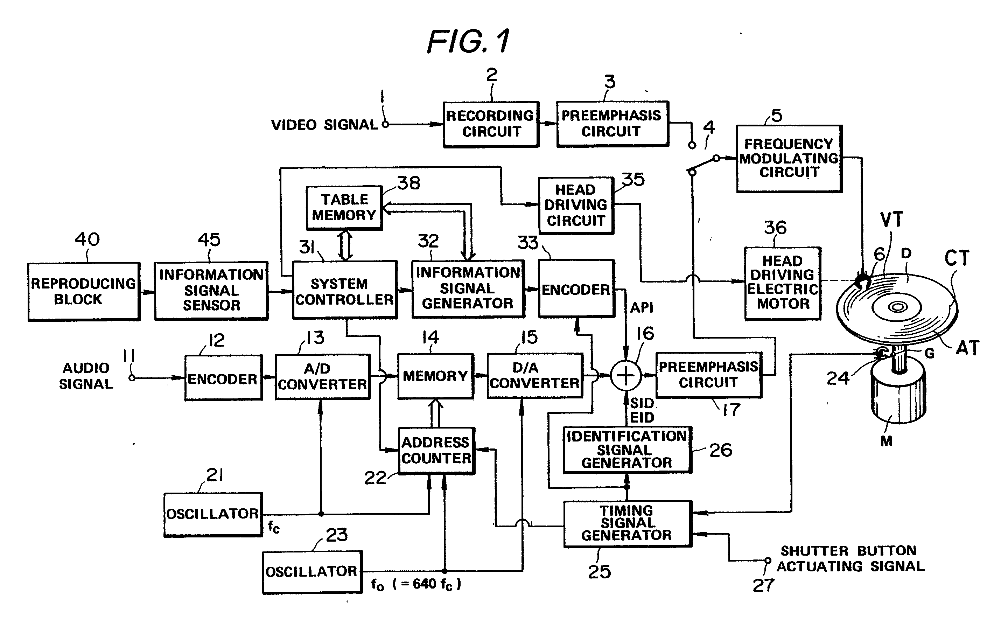

Figure 1 shows in a block diagram form a recording apparatus embodying the present invention wherein an audio or voice signal recording track ("audio track") and a video signal recording track ("video track") can be recorded in co-existence on a unitary disc used as a recording medium. The technology disclosed in this block diagram is basically the same as that disclosed in EP-A-0 180 477 (cited above).

Referring to Figure 1, video signals representing one picture or field to be recorded are supplied to an input terminal 1 and converted in a recording circuit 2 into predetermined recording signals. These recording signals are transmitted via a pre-emphasis circuit 3 of non-linear characteristics and a changeover switch 4 to a frequency modulating circuit 5, where they are converted into frequency modulated (FM) signals. The FM signals are transmitted to a magnetic head 6 so as to be recorded as a video track VT on a disc D rotationally driven at, for example, 3600 rpm by an electric motor M.

Meanwhile, audio signals are supplied to an input terminal 11 and from there to an analog/digital conversion circuit (A/D converter) 13 through an encoder 12 intended for noise reduction. The audio signals are converted in the A/D converter 13 into digital signals that are then written into a digital memory 14. The signals are read out from the digital memory 14 and transmitted to a digital/analog conversion circuit (D/A converter) 15 for conversion into analog signals. At this time, clock signals of a frequency $f_c$ used for sampling audio signals having a bandwidth of, for example, 5 kHz, are supplied from an oscillator 21 to the A/D converter 13, while being supplied also to an address counter 22 operative to drive and control the memory 14.

In the present embodiment, clock signals $f_0$, having a frequency equal to about 640 times the frequency $f_c$ of the sampling clock signals, that is having a frequency equal to 640 $f_c$, are supplied from an oscillator 23 to the D/A converter 15, while being supplied also to the address counter 22. Meanwhile, pulse signals at intervals of a one-sixtieth of a second, based on the rotational phase of the disc D as sensed by a pickup head 24 with each revolution of a magnetic piece G mounted on a rotary driving shaft of the disc D, are supplied to a timing signal generator or generating cicuit 25. On the basis of these pulse signals, timing signals are produced in the timing signal generator 25 so as to be supplied to the address counter 22. The timing signals from the timing signal generator 25 are transmitted also to an identification signal generator 26 (described hereinbelow) and to an encoder 33. Shutter button actuating signals are generated by actuating a shutter button switch (not shown) of an electronic still camera which, for example, constitutes the recording apparatus, and supplied at a terminal 27 to the timing signal generator 25.

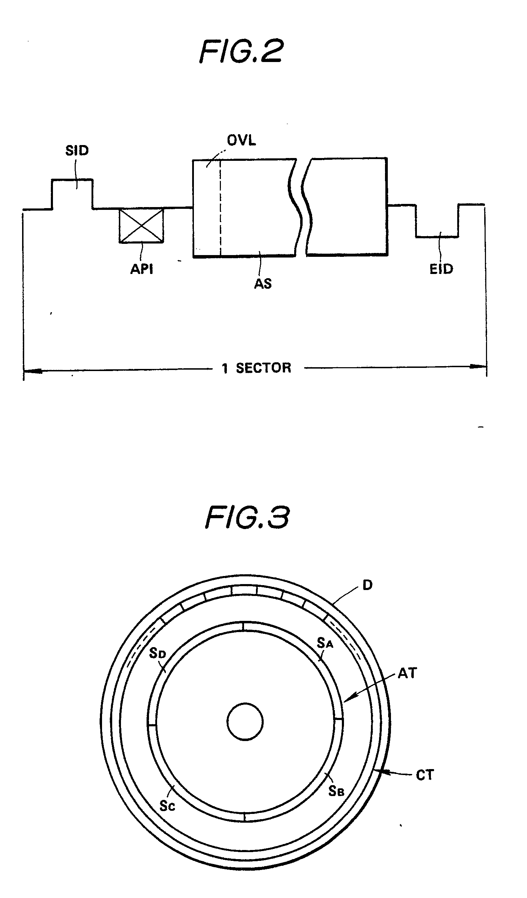

Thus, the audio signals, which have been converted into corresponding digital signals by the A/D converter 13 in accordance with the sampling signals from the oscillator 21, are written into the memory 14 with the sampling signals acting as write clock signals. At this time, the audio signals are written into the memory 14 during a sector or segment having a duration of, for example, 2.5 seconds, which is a quadrisection of 10 seconds. In the present embodiment, the written signals are read out from the memory 14 in accordance with the signals from the oscillator 23 at a rate which is 640 times that used at the time of writing. Stated differently, the audio signals of the duration of 2.5 seconds are compressed along their time axis by a factor of 1/640, that is into signals having a duration of 2.5/640 seconds, which is approximately equal to 3.9 milliseconds. These audio signals, compressed along the time axis, correspond to audio signals shown in Figure 2, as described hereinbelow. During this read-out time, audio signals corresponding to sectors SA, SB, SC and SD on the disc D, described hereinbelow with reference to Figure 3, are read out on the basis of the pulse signals having a period of 1/60 of a second from the pickup head 24 and at a timing sequentially dephased by one quarter of a period (by 1/240 of a second) for each 25 seconds.

The audio signals read out from the memory 14 are converted in the D/A converter 15 into corresponding analog signals as described hereinabove before being transmitted to a signal mixer 16. Start identification signals SID and end identification signals EID (see Figure 2) produced in the identification signal generator 26 on the basis of the timing signals from the timing signal generator 25 are supplied to the signal mixer 16. Also supplied to the signal mixer 16, via the encoder 33, are information signals API (Figure 2) produced in an information signal generator 32 on the basis of control signals from a system controller 31. The information signals API consist of or comprise a control code used for controlling an operation of reproducing the audio signals and are mixed in the mixer 16 with the other signals supplied thereto to produce a signal having the pattern or format shown in Figure 2. Figure 2 shows a one-sector signal consisting of or comprising a time-axis-compressed audio signal AS, the start identification signal SID towards the front of the signal AS, the end identification signal EID towards the rear of the signal AS, and the information signal API between the signals SID and AS, the information signal API being used (as mentioned above) for controlling the operation of reproducing the audio signals.

The audio signal AS comprises at an end thereof an overlap portion OVL that overlaps with an adjacent end portion of an audio signal of an adjacent sector. The overlap portion OVL enhances continuity of the audio signals between adjacent sectors.

It is to be noted that the control code data of the information signal API comprises at least one of a currently reproduced track number Nt, a leading track number Nf and a next following track number Nn in the case of a continuous voice over plural tracks as well as the video track number on which corresponding video signals are recorded (corresponding track number Nc). The control code data may also include data concerning the sector-using status and a time axis compression mode, if required. The track numbers Nf and Nn indicate, respectively, the number of a track Nf in which a leading portion of a series of temporally continuous audio signals are recorded, when these signals are recorded over plural tracks, and the number of a track Nn in which the portion consecutive to the currently recorded portion of the audio signals is to be recorded.

The above-described sector signals having the format shown in Figure 2 are transmitted from the mixer 16 of Figure 1, via a linear preemphasis circuit 17 and the changeover switch 4, to the frequency modulating circuit 5. The signals from the circuit 5 are transmitted to the magnetic head 6 so as to be recorded at a rate of 4 sectors per track on the disc D. That is, four sectors SA, SB, SC and SD are recorded on one audio track AT on the disc D.

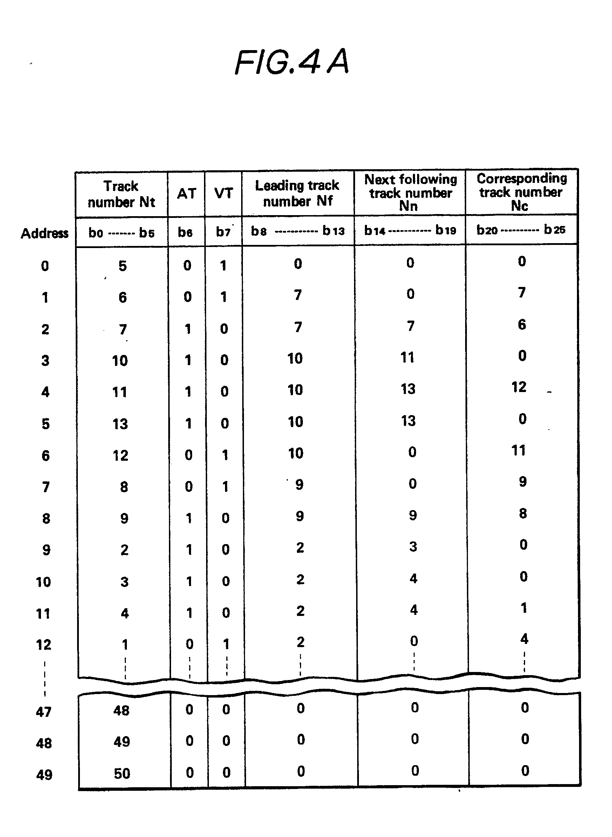

During recording of the above-mentioned video and audio signals, head position control signals are supplied from the system controller 31 through a head driving circuit 35 to a head driving electric motor 36. The magnetic head 6 is driven and controlled by the motor 36 so as thereby to be positioned, for example, at a track on the disc D corresponding to the current track number Nt. The above-mentioned leading track number Nf, next following track number Nn and the corresponding track number Nc are transferred to and stored in a digital table memory 38 for forming a table such as those shown in Figures 4A to 4C. On at least one track, namely a so-called "control track" CT, which is located at a predetermined position on the disc D, for example at an outermost or innermost position thereof, there is recorded so-called control data, shown in Figure 3, such as the track number information stored in the table memory 38.

Figures 4A to 4C show examples of the contents of the table memory 38. The table memory 38 has a capacity (number of blocks) corresponding to the number of tracks on the disc D, such as 50 tracks, except for the above-mentioned control track CT. Addresses, such as addresses 0 to 49, are sequentially affixed to the fifty blocks. Each memory block correspnding to each track is composed of 26 bits $b_0$ to $b_{25}$, with the 6 bits $b_0$ to $b_5$ being assigned to its own track number Nt, the bit $b_6$ indicating whether the track is an audio signal record track AT and the bit $b_7$ indicating whether the track is a video signal record track VT. The six bits $b_8$ to $b_{13}$ are assigned to the leading track number Nf of the audio information, the six bits $b_{14}$ to $b_{19}$ are assigned to the next following track number Nn of the audio information, and the six bits $b_{20}$ to $b_{25}$ are assigned to the above-mentioned corresponding track number Nc.

When a plurality of the audio tracks corresponds to a single video track, the track number of the associated video track is entered only into the address of an optionally selected single audio track. Conversely, in the address corresponding to a video track, the track number of one of the associated audio tracks is entered.

During recording of the video or audio signals, the number Nt of the currently recorded track, the bits indicating whether the track is an audio track AT or video track VT, the leading track number Nf, the next following track number Nn and the corresponding track number Nc are written in each block at their respective predetermined bit positions, starting from the block of the more junior address number.

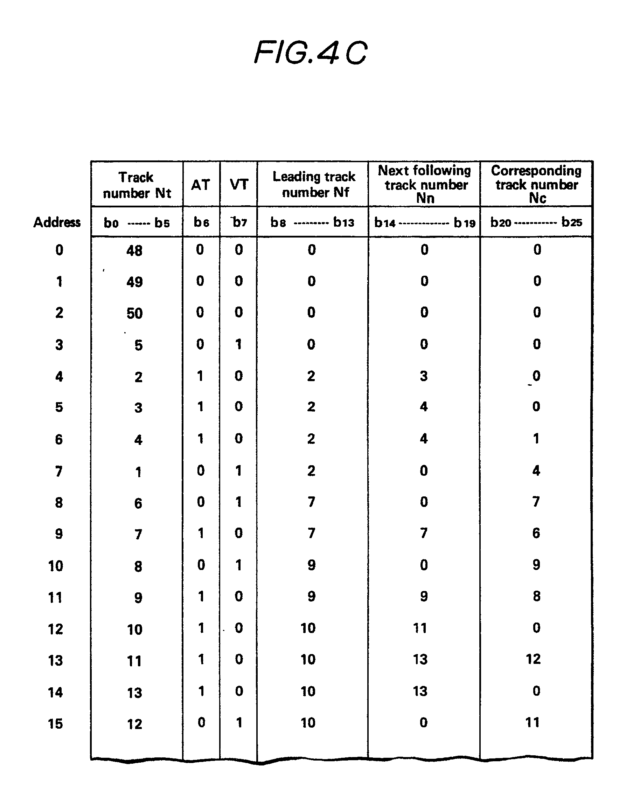

Figure 4A shows the contents of the table memory 38 in a case in which the recording on the record tracks on the disc D is performed in the sequence shown for example in Figure 5. Referring to Figures 4A and 5, in connection with a single video signal being recorded in the fifth track, a track number '5' is written into a bit area $b_0$ to $b_5$ of the track number Nt of the block bearing the address 0. The bit $b_6$ for the audio track AT is '0', the bit $b_7$ for the video track VT is "1", and the bit areas Nf, Nn and Nc are all '0'. Next, in connection with the video signal being recorded in the sixth track and corresponding audio signals being recorded in the seventh track, data concerning the track number Nt = 6 is written into the block having the address 1, while data concerning the track number Nt = 7 is written into the block having the address 2. In this manner, the table shown in Figure 4A is sequentially formed in accordance with the recording sequence on the disc D shown in Figure 5.

After the end of recording, just prior to taking out the disc D from the recording apparatus or device or just prior to power being turned off, the data in the table of Figure 4A is recorded as so-called control data on the control track CT on the disc D. It will be noted that, although the data can be written on the control track CT each time each sequence is terminated, by starting from the junior address number in regular order, it is also possible to record the data at a time after the recording of a series of sequences such as those for 50 tracks is terminated. Taking the case of Figure 5 as an example, while the data can be written after each sequence such as (1,2,3,4), (5), (6,7) or (8,9) is terminated, it is also possible to record the data at a time after a series of sequences such as (1,2,3,4......,P,11,12,13) is terminated.

It is also to be noted that, as shown in Figure 5, the order of the data on the disc D is not necessarily constant, but may frequently be disturbed in the course of repetitive recording, erasing and reproducing operations.

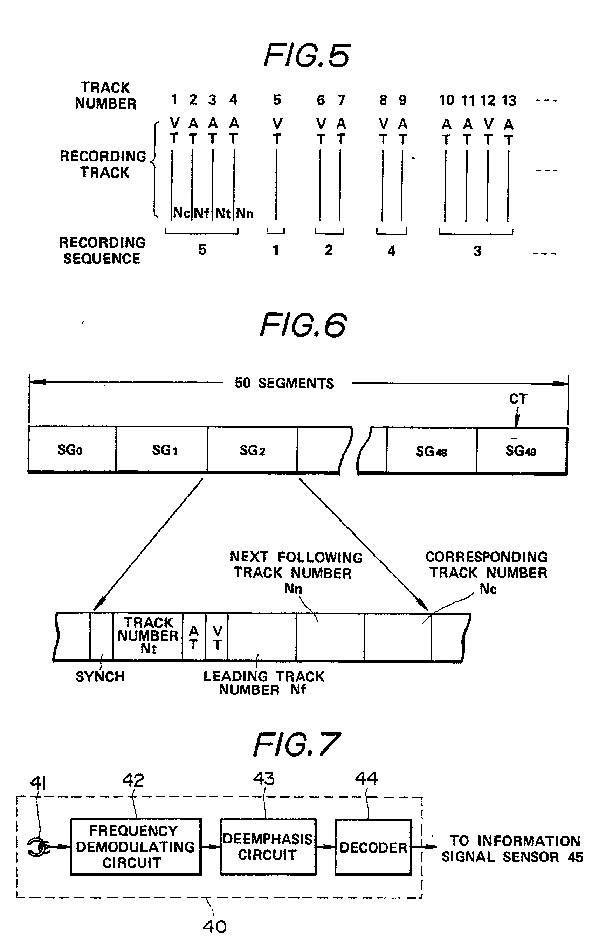

As shown in Figure 6, the control track CT is divided into segments, such as 50 segments $SG_0$ to $SG_{49}$, corresponding to the tracks, such as 50 tracks, on the disc D. Each of the segments $SG_0$ to $SG_{49}$ has, at the beginning, an area for synchronising signals, followed by recording areas for the data Nt, AT, VT, Nf, Nn and Nc corresponding to one block in the table memory 38. In this case, it can be considered that the segment $SG_k$ of an address k corresponds to the block bearing the address k in the table memory 38 and that the data in the block is recorded in the segment $SG_k$.

During recording of the table data in the control track CT, the data in the table memory 38 is read out by the system controller 31 and the information signal generator 32 so as to be processed into control data signals, that is signals having the format shown in Figure 6. These control data signals are transmitted via the encoder 33 and the mixer 16 to the preemphasis circuit 17. The output signals from the preemphasis circuit 17 are transmitted via the changeover switch 4 to the FM circuit 5. Simultaneously, head position control signals from the system controller 31 are transmitted via the head driving circuit 35 to the head driving electric motor 36 such that the magnetic head 6 is shifted to the position of the control track CT on the disc D, such as the position of the outermost track on the disc. The signals from the FM circuit 5 are supplied to the magnetic head 6 for recording on the control track.

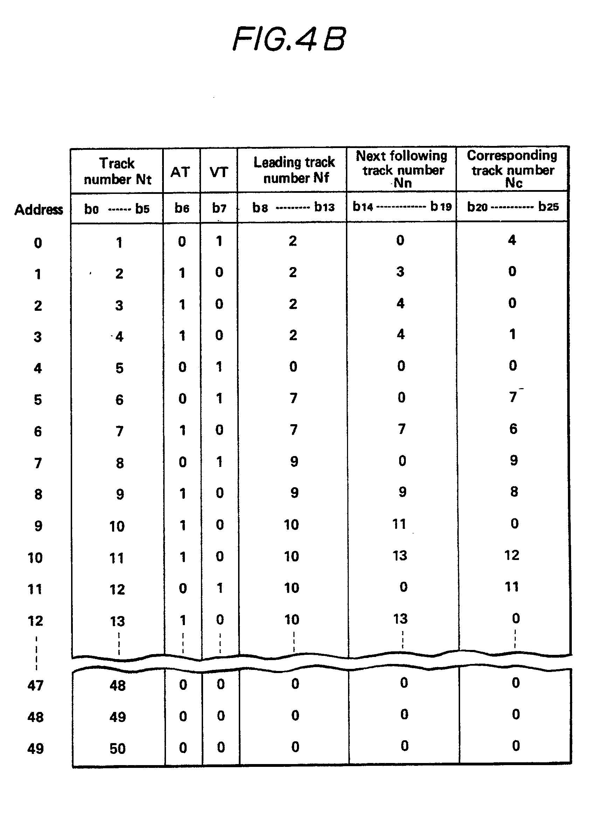

As will be described in further detail hereinafter, prior to the recording on the control track CT, the order of the data in the table memory 38 can be rearranged selectively so that the track number sequence is as shown, for example, in Figures 5 and 4A (organised by recording sequence), Figure 4B (organised by track number Nt) or Figure 4C (organised by leading track number Nf).

It is now assumed that a disc D is only partially recorded and recording is to be performed on a vacant or unrecorded track. In this case, after the disc D has been loaded into the recording apparatus, such as an electronic still camera, and the camera is switched from a state in which power is turned off to a standby state for recording, at least the control track CT is reproduced by a reproducing block 40, the control data (such as the track number etc.) is read out by an information signal sensor 45, and the thus read-out data is written into the table memory 38 through the system controller 31.

The reproducing block 40 is constructed, for example, as shown in Figure 7. Signals reproduced from the disc D by a reproducing magnetic head 41, which can be the same as the magnetic head 6, are frequency demodulated in a frequency demodulator or demodulating circuit 42 before being transmitted to a decoder 44, which has characteristics that are the reverse of or opposite to those of the encoder 33, by way of a deemphasis circuit 43, which has characteristics that are the reverse of or opposite to those of the preemphasis circuit 17 of the voice recording system. Output signals from the decoder 44 are supplied to the information signal sensor circuit 45 shown in Figure 1.

This feature is useful for an electronic still camera in which the disc can be mounted or demounted after partial recording on the disc D is terminated, or in which data stored in the table memory 38 is erased at the time of power being turned off. The using or recording state of the recording tracks on the disc D is written at all times in the table memory 38 before the signal recording, resulting in better track control or management and prevention of the inconvenience of new signals inadvertently being recorded on tracks on which recordings previously have been made.

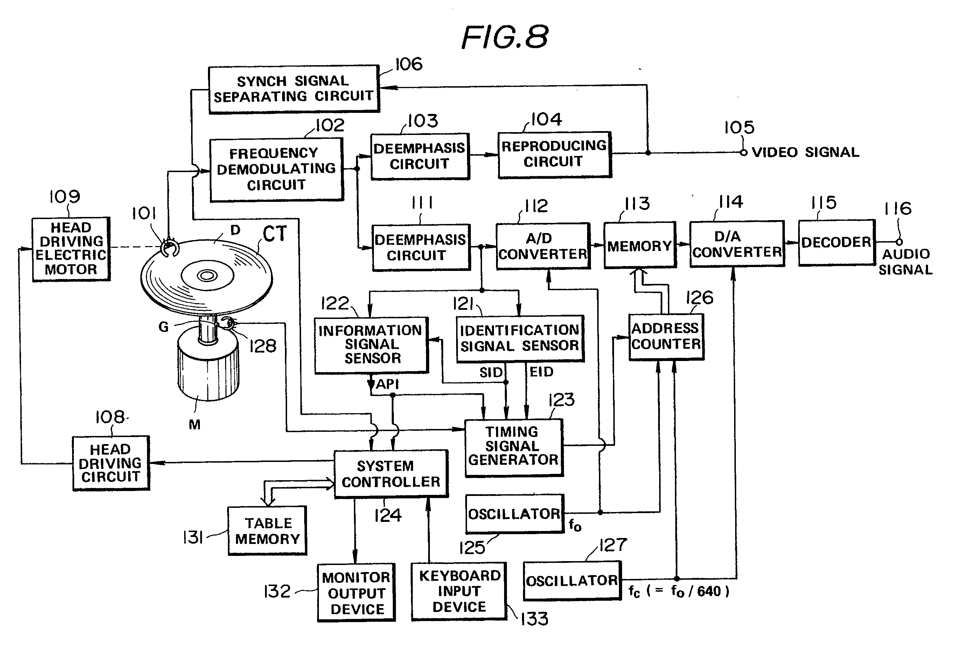

A reproducing apparatus such as that shown in Figure 8 may be used for reproducing a disc D on which recordings have been made by the recording apparatus described above.

Referring to Figure 8, prior to reproduction of the audio or video signals, a system controller 124 operates to shift a magnetic head 101 to the predetermined position of the control track CT, via a head driving circuit 108 and a head driving electric motor 109, in such a manner as to reproduce the control data including the above-mentioned track number data recorded on the control track CT. The reproduced signals from the magnetic head 101 obtained upon scanning the control track CT are transmitted via a frequency demodulating circuit 102 and a deemphasis circuit 111 to an information signal sensor or sensor circuit 122. The reproduced signals are processed by the information signal sensor 122 into data signals indicating the track numbers Nt, Nf, Nn and Nc in the table so as to be sequentially written by the system controller 124 in associated positions of a digital table memory 131. In this case, the table memory 131 consists of or comprises 50 blocks each containing 26 bits, similarly to the above-described table memory 38. When the recorded contents of the segments $SG_0$ to $SG_{49}$ of the control track CT are written into the blocks having the addresses 0 to 49 of the control track CT, respectively, the table as shown for example in Figure 4A is formed in the table memory 131. Thus, in a dual type apparatus that can be used both as a recording unit and as a reproducing unit, a common table memory can be used in these units.

The contents of the table as shown, for example, in Figure 4A are read out from the memory 131 via the system controller 124 so as to be displayed in a monitor output device 132 such as a cathode ray tube display device. In this case, the table per se shown in Figure 4A, or a portion thereof, can be displayed. By consulting the table display, the user or operator can use a keyboard input device 133 to select the image and voice of a desired sequence and then perform a data inputting operation to the system controller 124 for reproducing the selected voice and image. It is to be noted that display of the reproduced image and the data from the system controller 124 can be effected by using the same monitoring output device 132.

It is assumed that the track number Nt of the table of, for example, Figure 4A is to be designated as an example of the reproducing operation by the keyboard input device 133. The system controller 124 reads the memory block of the designated track number Nt in the table of, for example, Figure 4A in the table memory 131. If the designated track is an audio track, the system controller 124 controls the head driving circuit 108 for sequentially reproducing from the track having the leading track number Nf such that a series of audio signals corresponding to the sequence including the designated track is reproduced.

If the designated track is a video track, since the leading track number Nf of the corresponding audio signal is written into the associated memory block of the table, the sequence can be reproduced from the leading part thereof. In the table shown in Figure 4A, since the tracks are organised by units of sequences, the track can be designated by specifying the sequence number, which may for example be the leading track number Nf itself or a new number in accordance with the recording order shown in Figure 5. In this manner, the desired sequence can be reproduced instantaneously.

In this case, the contents of the table memory can be displayed on the monitor output device 132, as shown in Figure 4A, or, after sorting, in the order of the track number Nt as shown in Figure 4B. Such sorting can also be in the order of the leading track numbers of the voice sequence, as shown in Figure 4C. The order of display can be changed in accordance with the operation that is performed on the keyboard input device 133. It is to be noted that Figures 4A to 4C show various alternative states of the data contents corresponding to the addresses in the table memory 131, these data contents being displayed directly. However, it is also possible to provide a separate buffer memory, with the contents of the table memory 131 being constant at all times and the data contents in the buffer memory being displayed with the changes in the order of the display.

The other components of the reproducing apparatus shown in Figure 8 are provided for performing an operation which is the reverse of the above-mentioned operation of the recording apparatus shown in Figure 1 for restoring the original video or audio signals before recording thereof.

Thus, referring to Figure 8, signals reproduced by the magnetic head 101 from the disc D are transmitted to the frequency demodulating circuit 102. When the magnetic head 101 is scanning over a video track VT bearing recorded video signals, demodulated signals are taken out as video signals at an output terminal 105 through a reproducing circuit 104 and a deemphasis circuit 103 having non-linear characteristics.

When the magnetic head 101 is scanning a track bearing recorded audio signals, demodulated signals are supplied, via the deemphasis circuit 111, which has linear characteristics, to an A/D converter 112, while also being supplied to an identification signal sensor or sensor circuit 121 and the information signal sensor 122. The start identification signals SID and end identification signals EID are sensed at the identification signal sensor 121 and are supplied to a timing signal generator 123. The start identification signals SID are supplied to the information signal sensor 122, while the information signals API controlling the reproducing operation of the audio signals, which are sensed at the information signal sensor circuit 122, also are supplied to the timing signal generator 123. In addition, the information signals API and a video synchronising signal from a synchronising signal separating circuit 106 are supplied to the system controller 124, where control of the overall system is performed.

The time compressed audio signals are converted into digital signals by the A/D converter 112 and are written into a memory 113. Signals read out from the memory 113 are transmitted to an A/D converter 114 and thereby converted into corresponding analog signals. It will be noted that signals having a frequency $f_0$ equal to the frequency of the oscillator 23 of Figure 1 are supplied from an oscillator 125 to the A/D converter 112 while also being supplied to an address counter 126 driving and controlling the memory 113. Signals having a frequency $f_c$ equal to that of the oscillator 21 of Figure 1, that is signals of a frequency equal to 1/640th of that of the signals from the oscillator 125, are supplied from an oscillator 127 to the A/D converter 114 while also being supplied to the address counter 126.

Timing signals based on pulse signals having a period of 1/60 of a second from a pickup head 128 are generated at the timing signal generator 123 so as to be supplied to the address counter 126. Writing to the memory 113 is performed in response to signals from the oscillator 125 while reading of the memory 113 is performed in response to signals from the oscillator 127 at a rate equal to 1/640th of that used during writing. Stated differently, audio signals are expanded along their time axis by a factor of 640 and restored to their original length by an operation which is the reverse of that performed at the time of recording. The signals thus expanded along their time axis are transmitted from the D/A converter 114 so as to be taken as continuous audio signals at an output terminal 116 through a decoder 115 which is intended for noise reduction.

The present invention is not of course limited to the above described illustrative example. For example, in the case of a recording apparatus in which the disc cannot be taken out until recording of the totality of tracks on one disc is terminated and the data in the table memory is preserved at the time of power being turned off, such as an electronic still camera, the reproducing block 40 and the information signal sensor circuit 45 shown in Figure 1 can be dispensed with.

Since the data concerning the leading track number, the next following track number, and the track number of the corresponding video signals for a series of temporally consecutive audio signals are densely recorded on the control track which is at a predetermined track location, the control track can be reproduced at the time of signal reproduction for writing into the table memory, and access can be had to the track while consulting the table. In this manner, a series of audio signals and corresponding video signals are reproduced smoothly and promptly and track control or management is facilitated while providing freer access to the tracks. In addition, track control or management in the case of recording signals in a vacant or unrecorded track of a partially previously recorded disc is also facilitated or can be performed more reliably, while inadvertent recording is effectively prevented.

Moreover, an editing operation is facilitated by having the table memory 131 without the necessity of using the control track CT during the editing process. The table shown in Figure 4B or the table shown in Figure 4C is read from the memory 131 through the system controller 124 so as to be displayed on the monitor output device 132, which is, for example, a cathode ray tube display. At this time, the table shown in Figure 4B, for example, can be directly displayed, or a part of the table shown in Figure 4B can be displayed. By consulting the table display, the user or operator can select an image or voice of a desired sequence and input information, by employing the keyboard input device 133, for causing the selected voice and image to be reproduced. It is to be noted that display of the reproduced image and of the data from the system controller 124 can be effected on the same monitor output device.

As an example of a selective reproducing operation, when the track number Nt of the table of Figure 4B is designated through the keyboard input device 133, the system controller 124 read out the memory block of the designated track number Nt in the table of Figure 4B of the table memory 131. When the designated track is a voice track, the system controller 124 controls the head driving circuit 108 for sequentially reproducing from the track having the leading track number Nf so as to produce a series of audio signals belonging to the sequence containing the designated track. When the designated track is a video track, since the leading track number Nt of the corresponding audio signals is written in the memory block of the table, reproduction can be achieved starting at the leading end of the sequence.

## Claims

1. Signal recording apparatus capable of recording, on recording tracks of a rotary recording medium (D), both a plurality of video signal fields and a plurality of audio signals, the apparatus including means (14,21,22,23) for time-compressing the audio signals, means (32) for generating control code data (API) indicating correspondence between the audio signals and the video signal fields, and means (16 etc.) for recording the control code data (API) together with the associated time-compressed audio data (AS), the recording apparatus being characterised in that:

    (a) the apparatus is capable of recording the video signal fields and the audio signals on a recording medium having recording tracks arranged concentrically with respect to one another such that each video signal field is recorded on a respective one of the tracks (VT) and each audio signal is recorded on one or on a plurality of the tracks (AT) other than those on which the video signal fields are recorded;

(b) the means (32) for generating the control code data (API), for controlling a reproduction sequence of audio signals recorded on the tracks, is operative to generate control code data (API) including: address data that indicates a track number (Nt) and address on the rotary recording medium (D); discriminating data that indicates whether a track (AT) being reproduced is a track forming part of a said plurality of the tracks on which an audio signal is recorded and, if so, indicating a track number (Nf) of the leading track of the plurality and a track number (Nn) of the next following track of the plurality; and corresponding track number data that indicates a track number (Nc) of a track (VT) on which a video signal field, corresponding to the audio signal being reproduced, is recorded;

(c) table memory means (38) is provided for storing the control code data (API) including said address data, said discriminating data and said corresponding track number data;

(d) means (16 etc.) is provided for recording the control code data (API) in predetermined portions of the respective tracks (AT) on which the audio signals are recorded, together with the associated time-compressed audio data (AS); and

(e) means is provided for recording the control code data (API) stored in the table memory means (38) on a control track (CT) at a predetermined location on the rotary recording medium (D).

2. Apparatus according to claim 1, wherein the means for recording the control code data (API) is operative to read out the control code data stored in the table memory means (38) and record it on the control track (CT) when recording of the time-compressed audio signal and a video signal field for a given scene corresponding thereto is completed.

3. Apparatus according to claim 1, wherein the means for recording the control code data (API) is operative to read out the control code data stored in the table memory means (38) and record it on the control track (CT) when recording of the time-compressed audio signal and a video signal field for a given series of scenes corresponding thereto is completed.

4. Apparatus according to claim 2 or claim 3, which is operative to read out the control code data (API) stored in the table memory means (38) and record it on the control track (CT) before the rotary recording medium (D) is removed from the recording apparatus.

5. Apparatus according to any one of the preceding claims, wherein the means for time-compressing the audio signals includes audio signal memory means (14), means (13) for inputting audio data in digital form into the audio signal memory means (13), a write/read address counter (22) for controlling the audio signal memory means (14), and first and second clock signal generators (21,23) for generating first and second clock signals, respectively, and supplying them to the write/read address counter (22), the first clock signal corresponding to a selected clock frequency and having a frequency ($f_c$) substantially less than the second clock signal frequency ($f_o$), whereby the write/read address counter (22) is operative to generate write addresses at the first frequency ($f_c$) and read addresses at the second frequency ($f_o$) so that the digital audio data is written into the audio signal memory means (14) at the first clock signal frequency ($f_c$)and is read out of the audio signal memory means (14) at the higher, second clock signal frequency ($f_o$).

6. Apparatus according to claim 5, wherein the second clock signal generator (23) is operative to produce the second clock signal at a frequency ($f_o$) which is 640 times the frequency ($f_c$)of the first clock signal.

7. A method of recording, on recording tracks of a rotary recording medium (D), both a plurality of video signal fields and a plurality of audio signals, the method comprising time-compressing the audio signals, generating control code data (API) indicating correspondence between the audio signals and the video signal fields, and recording the control code date (API) together with the associated time-compressed audio data (AS), the method being characterised by:

(a) recording the video signal fields and the audio signals such that each video signal field is recorded on a respective one of the tracks (VT) and each audio signal is recorded on one or on a plurality of the tracks (AT) other than those on which the video signal fields are recorded;

(b) generating the control code data (API), for controlling a reproduction sequence of audio signals recorded on the tracks, such that the control code data (API) includes: address data that indicates a track number (Nt) and address on the rotary recording medium (D); discriminating data that indicates whether a track (AT) being reproduced is a track forming part of a said plurality of the tracks on which an audio signal is recorded and, if so, indicating a track number (Nf) of the leading track of the plurality and a track number (Nn) of the next following track of the plurality; and corresponding track number data that indicates a track number (Nc) of a track (VT) on which a video signal field, corresponding to the audio signal being reproduced, is recorded;

(c) storing the control code data (API) including said address data, said discriminating data and said corresponding track number data;

(d) recording the control code data (API) in predetermined portions of the respective tracks (AT) on which the audio signals are recorded, together with the associated time-compressed audio data (AS); and

(e) recording the stored control code data (API) on a control track (CT) on the rotary recording medium (D).

8. A method according to claim 7, wherein the step of recording the control code data (API) includes reading out the stored control code data and recording it on the control track (CT) when recording of the time-compressed audio signal and a video signal field for a given scene corresponding thereto is completed.

9. Signal reproducing apparatus capable of reproducing signals from a rotary recording medium (D) having recording tracks on which both a plurality of video signal fields and a plurality of audio signals are recorded, the audio signals being recorded in the form of time-compressed audio data (AS) having recorded therewith control code data (API) indicating correspondence between the audio signals and the video signal fields, the apparatus having means (113,124,126,127) for time-expanding the time-compressed audio data (AS) read from the rotary recording medium (D), and the apparatus being characterised in that:

(a) the apparatus is capable of reproducing signals from a rotary recording medium (D) having recording tracks arranged concentrically with respect to one another and on which the video signal fields and audio signals are recorded such that each video signal field is recorded on a respective one of the tracks (VT) and each audio signal is recorded on one or on a plurality of the tracks (AT) other than those on which the video signal fields are recorded, each track (AT) with an audio signal or part thereof recorded thereon having the audio signal or part thereof recorded thereon in the form of time compressed audio data (AS) and also having recorded thereon the control code data (API), the control code data (API) including: address data that indicates a track number (Nt) and address on the rotary recording medium (D); discriminating data that indicates whether a track (AT) being reproduced is a track forming part of a said plurality of the tracks on which an audio signal is recorded and, if so, indicating a track number (Nf) of the leading track of the plurality and a track number (Nn) of the next following track of the plurality; and corresponding track number data that indicates a track number (Nc) of a track (VT) on which a video signal field, corresponding to the audio signal being reproduced, is recorded, and the recording medium (D) also having a control track (CT) on which the control code data (API) is recorded;

(b) decoder means (122) is provided for reproducing the control code data (API);

(c) table memory means (131) is provided for storing the control code data (API) reproduced by the decoder means (122), the control code data including said address data, said discriminating data and said corresponding track number data;

(d) display means (132) is provided for displaying the control code data stored in the table memory means (131); and

(e) means (133 etc.) is provided for selectively reading the video information and the time compressed audio data from the rotary recording medium (D) in accordance with the displayed control code data.

10. A signal reproducing method for reproducing signals from a rotary recording medium (D) having recording tracks on which both a plurality of video signal fields and a plurality of audio signals are recorded, the audio signals being recorded in the form of time-compressed audio data (AS) having recorded therewith control code data (API) indicating correspondence between the audio signals and the video signal fields, the method including time-expanding the reproduced, time-compressed audio data, and the method being characterised by:

(a) reproducing the signals from a rotary recording medium (D) having recording tracks arranged concentrically with respect to one another and on which the video signal fields and audio signals are recorded such that each video signal field is recorded on a respective one of the tracks (VT) and each audio signal is recorded on one or on a plurality of the tracks (AT) other than those on which the video signal fields are recorded, each track (AT) with an audio signal or part thereof recorded thereon having the audio signal or part thereof recorded thereon in the form of time compressed audio data (AS) and also having recorded thereon the control code data (API), the control code data (API) including: address data that indicates a track number (Nt) and address on the rotary recording medium (D); discriminating data that indicates whether a track (AT) being reproduced is a track forming part of a said plurality of the tracks on which an audio signal is recorded and, if so, indicating a track number (Nf) of the leading track of the plurality and a track number (Nn) of the next following track of the plurality; and corresponding track number data that indicates a track number (Nc) of a track (VT) on which a video signal field, corresponding to the audio signal being reproduced, is recorded, and the recording medium (D) also having a control track (CT) on which the control code data (API) is recorded;

(b) reproducing (122) the control code date (API) from the control track (CT);

(c) storing (131) the reproduced control code data (API), the control code data including said address data, said discriminating data and said corresponding track number data; and

(d) displaying (132) the stored control code data (API) and selectively controlling (133) a reproduction sequence of the audio and video signals recorded on the tracks in accordance with the displayed control code data (API).

11. A rotary recording medium (D) having recording tracks on which both a plurality of video signal fields and a plurality of audio signals are recorded, the audio signals being recorded in the form of time-compressed audio data having recorded therewith control code data (API) indicating correspondence between the audio signals and the video signal fields, the rotary recording medium (D) being characterised in that:

the recording tracks thereof are arranged concentrically with respect to one another;

the video signal fields and the audio signals are recorded such that each video signal field is recorded on a respective one of the tracks (VT) and each audio signal is recorded on one or on a plurality of the tracks (AT) other than those on which the video signal fields are recorded;

each track (AT) with an audio signal or part thereof recorded thereon has the audio signal or part thereof recorded thereon in the form of time compressed audio data (AS) and also has recorded thereon the control code data (API);

the control code data (API) includes: address data that indicates a track number (Nt) and address on the rotary recording medium (D); discriminating data that indicates whether a track (AT) being reproduced is a track forming part of a said plurality of the tracks on which an audio signal is recorded and, if so, indicating a track number (Nf) of the leading track of the plurality and a track number (Nn) of the next following track of the plurality; and corresponding track number data that indicates a track number (Nc) of a track (VT) on which a video signal field, corresponding to the audio signal being reproduced, is recorded; and

the recording medium (D) also has a control track (CT) on which the control code data (API) is recorded.

## Revendications

1. Appareil d'enregistrement de signaux capable d'enregistrer, sur des pistes d'enregistrement d'un support d'enregistrement tournant (D),à la fois un ensemble de trames de signaux vidéo et un ensemble de signaux audio, l'appareil comprenant des moyens (14, 21, 22, 23) pour effectuer une compression temporelle des signaux audio, des moyens (32) pour générer des données de code de commande (API) indiquant la correspondance entre les signaux audio et les trames de signaux vidéo, et des moyens (16, etc.) pour enregistrer les données de code de commande (API) conjointement aux données audio comprimées dans le temps associées (AS), cet appareil d'enregistrement étant caractérisé en ce que :

(a) l'appareil est capable d'enregistrer les trames de signaux vidéo et les signaux audio sur un support d'enregistrement comportant des pistes d'enregistrement disposées de façon mutuellement concentrique, de façon que chaque trame de signal vidéo soit enregistrée sur l'une respective des pistes (VT) et que chaque signal audio soit enregistré sur une piste ou un ensemble de pistes (AT) autres que celles sur lesquelles les trames de signaux vidéo sont enregistrées;

(b) les moyens (32) destinés à générer les données de code de commande (API), pour commander une séquence de reproduction de signaux audio enregistrés sur les pistes, génèrent des données de code de commande (API) comprenant : des données d'adresse qui indiquent un numéro de piste (Nt) et une adresse sur le support d'enregistrement tournant (D); des données de discrimination qui indiquent si une piste (AT) qui est reproduite est une piste qui fait partie de l'ensemble des pistes sur lesquelles un signal audio est enregistré et qui, dans l'affirmative, indiquent un numéro de piste (Nf) de la piste de tête de l'ensemble et un numéro de piste (Nn) de la piste immédiatement suivante de l'ensemble; et des données de numéro de piste correspondante qui indiquent un numéro de piste (Nc) d'une piste (VT) sur laquelle est enregistrée une trame de signal vidéo correspondant au signal audio qui est reproduit;

(c) des moyens de mémoire de table (38) sont incorporés dans le but de mémoriser les données de code de commande (API) comprenant les données d'adresse, les données de discrimination et les données de numéro de piste correspondante;

(d) des moyens (16, etc.) sont incorporés pour enregistrer les données de code de commande (API) dans des parties prédéterminées des pistes respectives (AT) dans lesquelles les signaux audio sont enregistrés, en compagnie des données audio comprimées dans le temps associées (AS); et

(e) des moyens sont incorporés pour enregistrer les données de code de commande (API) mémorisées dans les moyens de mémoire de table (38), sur une piste de commande (CT) qui se trouve à une position prédéterminée sur le support d'enregistrement tournant (D).

2. Appareil selon la revendication 1, dans lequel les moyens destinés à enregistrer les données de code de commande (API) lisent les données de code de commande qui sont mémorisées dans les moyens de mémoire de table (38), et ils les enregistrent sur la piste de commande (CT) au moment où l'enregistrement du signal audio comprimé dans le temps et d'une trame de signal vidéo pour une scène donnée correspondante est terminé.

3. Appareil selon la revendication 1, dans lequel les moyens destinés à enregistrer les données de code de commande (API) lisent les données de code de commande qui sont mémorisées dans les moyens de mémoire de table (38) et ils les enregistrent sur la piste de commande (CT) lorsque l'enregistrement du signal audio comprimé dans le temps et d'une trame de signal vidéo pour une série donnée de scènes correspondantes est terminé.

4. Appareil selon la revendication 2 ou la revendication 3, capable de lire les données de code de commande (API) qui sont mémorisées dans les moyens de mémoire de table (38) et de les enregistrer sur la piste de commande (CT) avant que le support d'enregistrement tournant (D) ne soit retiré de l'appareil d'enregistrement.

5. Appareil selon l'une quelconque des revendications précédentes, dans lequel les moyens destinés à effectuer une compression temporelle des signaux audio comprennent des moyens de mémoire de signal audio (14), des moyens (13) pour introduire des données audio sous forme numérique dans les moyens de mémoire de signal audio (13), un compteur d'adresse d'écriture/lecture (22) pour commander les moyens de mémoire de signal audio (14), et des premier et second générateurs de signaux d'horloge (21, 23) destinés à générer respectivement des premier et second signaux d'horloge, et à les appliquer au compteur d'adresse d'écriture/lecture (22), le premier signal d'horloge correspondant à une fréquence d'horloge sélectionnée et ayant une fréquence ($f_c$) notablement inférieure à la fréquence du second signal d'horloge ($f_o$), grâce à quoi le compteur d'adresse d'écriture/lecture (22) génère des adresses d'écriture à la première fréquence ($f_c$) et des adresses de lecture à la seconde fréquence ($f_o$), de façon que les données audio numériques soient écrites dans les moyens de mémoire de signal audio (14) à la fréquence du premier signal d'horloge ($f_c$), et soient lues dans les moyens de mémoire de signal audio (14) à la fréquence du second signal d'horloge ($f_o$), qui est plus élevée.

6. Appareil selon la revendication 5, dans lequel le second générateur de signal d'horloge (23) produit le second signal d'horloge avec une fréquence ($f_o$) qui est égale à 640 fois la fréquence ($f_c$) du premier signal d'horloge.

7. Un procédé pour enregistrer, sur des pistes d'enregistrement d'un support d'enregistrement tournant (D), à la fois un ensemble de trames de signaux vidéo et un ensemble de signaux audio, le procédé comprenant la compression temporelle des signaux audio, la génération de données de code de commande (API) indiquant la correspondance entre les signaux audio et les trames de signaux vidéo, et l'enregistrement des données de code de commande (API) conjointement aux données audio comprimées dans le temps associées (AS), le procédé étant caractérisé par les opérations suivantes :

(a) on enregistre les trames de signaux vidéo et les signaux audio de façon que chaque trame de signal vidéo soit enregistrée sur l'une respective des pistes (VT) et que chaque signal audio soit enregistré sur une piste ou un ensemble de pistes (AT) autres que celles sur lesquelles les trames de signaux vidéo sont enregistrées;

(b) on génère les données de code de commande (API), pour commander une séquence de reproduction de signaux audio enregistrés sur les pistes, de manière que les données de code de commande (API) comprennant : des données d'adresse qui indiquent un numéro de piste (Nt) et une adresse sur le support d'enregistrement tournant (D); des données de discrimination qui indiquent si une piste (AT) qui est reproduite est une piste faisant partie d'un ensemble précité de pistes sur lesquelles un signal audio est enregistré et qui, dans l'affirmative, indiquent un numéro de piste (Nf) de la piste de tête de l'ensemble et un numéro de piste (Nn) de la piste immédiatement suivante de l'ensemble; et des données de numéro de piste correspondante qui indiquent un numéro de piste (Nc) d'une piste VT sur laquelle est enregistrée une trame de signal vidéo correspondant au signal audio qui est reproduit;

(c) on mémorise les données de code de commande (API) comprenant les données d'adresse, les données de discrimination et les données de numéro de piste correspondante;

(d) on enregistre les données de code de commande (API) dans des positions prédéterminées des pistes respectives (AT) sur lesquelles les signaux audio sont enregistrés, en compagnie des données audio comprimées dans le temps associées (AS); et

(e) on enregistre les données de code de commande mémorisées (API) sur une piste de commande (CT) sur le support d'enregistrement tournant (D).

8. Un procédé selon la revendication 7, dans lequel l'étape d'enregistrement des données de code de commande (API) comprend la lecture des données de code de commande mémorisées et l'enregistrement de ces données sur la piste de commande (CT) lorsque l'enregistrement du signal audio comprimé dans le temps et d'une trame de signal vidéo pour une scène donnée correspondante est terminé.

9. Appareil de reproduction de signal capable de reproduire des signaux à partir d'un support d'enregistrement tournant (D) comportant des pistes d'enregistrement sur lesquelles sont enregistrés à la fois un ensemble de trames de signaux vidéo et un ensemble de signaux audio, les signaux audio étant enregistrés sous la forme de données audio comprimées dans le temps (AS) avec lesquelles sont enregistrées des données de code de commande (API) indiquant la correspondance entre les signaux audio et les trames de signaux vidéo, l'appareil comportant des moyens (113, 124, 126, 127) pour effectuer une extension temporelle des données audio comprimées dans le temps (AS) qui sont lues sur le support d'enregistrement tournant (D), et l'appareil étant caractérisé en ce que :

(a) l'appareil est capable de reproduire des signaux à partir d'un support d'enregistrement tournant (D) comportant des pistes d'enregistrement disposées de façon mutuellement concentrique, et sur lequel les trames de signaux vidéo et les signaux audio sont enregistrés de manière que chaque trame de signal vidéo soit enregistrée sur l'une respective des pistes (VT) et que chaque signal audio soit enregistré sur une piste ou sur un ensemble de pistes (AT) autres que celles sur lesquelles sont enregistrées les trames de signaux vidéo, chaque piste (AT) sur laquelle est enregistré un signal audio ou une partie de celui-ci étant une piste dans laquelle le signal audio ou une partie de celui-ci est enregistré sous la forme de données audio comprimées dans le temps (AS), et dans laquelle les données de code de commande (API) sont également enregistrées, les données de code de commande (API) comprenant : des données d'adresse qui indiquent un numéro de piste (Nt) et une adresse sur le support d'enregistrement tournant (D); des données de discrimination qui indiquent si une piste (AT) qui est reproduite est une piste qui fait partie de l'ensemble précité des pistes sur lesquelles un signal audio est enregistré et qui, dans l'affirmative, indiquent un numéro de piste (Nf) de la piste de tête de l'ensemble et un numéro de piste (Nn) de la piste immédiatement suivante de l'ensemble; et des données de numéro de piste correspondante qui indiquent un numéro de piste (Nc) d'une piste (VT) sur laquelle est enregistrée une trame de signal vidéo correspondant au signal audio qui est reproduit, et le support d'enregistrement (D) comportant également une piste de commande (CT) sur laquelle les données de code de commande (API) sont enregistrées;

(b) des moyens décodeurs (122) sont incorporés pour reproduire les données de code de commande (API);

(c) des moyens de mémoire de table (131) sont incorporés pour mémoriser les données de code de commande (API) qui sont reproduites par les moyens décodeurs (122), les données de code de commande comprenant les données d'adresse, les données de discrimination et les données de numéro de piste correspondante;

(d) des moyens de visualisation (132) sont incorporés pour visualiser les données de code de commande qui sont mémorisées dans les moyens de mémoire de table (131); et

(e) des moyens (133, etc.) sont incorporés pour lire sélectivement sur le support d'enregistrement tournant (D) l'information vidéo et les données audio comprimées dans le temps, conformément aux données de code de commande qui sont visualisées.

10. Un procédé de reproduction de signal pour reproduire des signaux à partir d'un support d'enregistrement tournant (D) comportant des pistes d'enregistrement sur lesquelles sont enregistrés à la fois un ensemble de trames de signaux vidéo et un ensemble de signaux audio, les signaux audio étant enregistrés sous la forme de données audio comprimées dans le temps (AS) en compagnie desquelles sont enregistrées des données de code de commande (API) indiquant la correspondance entre les signaux audio et les trames de signaux vidéo, le procédé comprenant l'extension temporelle des données audio comprimées dans le temps qui sont reproduites, et le procédé étant caractérisé par les opérations suivantes :

(a) on reproduit les signaux à partir d'un support d'enregistrement tournant (D) comportant des pistes d'enregistrement qui sont disposées de façon mutuellement concentrique, et sur lesquelles les trames de signaux vidéo et les signaux audio sont enregistrés de façon que chaque trame de signal vidéo soit enregistrée sur l'une respective des pistes (VT) et chaque signal audio soit enregistré sur une piste ou un ensemble de pistes (AT) autres que celles sur lesquelles sont enregistrées les trames de signaux vidéo, chaque piste (AT) sur laquelle est enregistré un signal audio ou une partie de celui-ci étant une piste dans laquelle le signal audio ou une partie de celui-ci est enregistré sous la forme de données audio comprimées dans le temps (AS) et dans laquelle sont également enregistrées les données de code de commande (API), les données de code de commande (API) comprenant : des données d'adresse qui indiquent un numéro de piste (Nt) et une adresse sur le support d'enregistrementtournant (D); des données de discrimination qui indiquent si une piste (AT) qui est reproduite est une piste qui fait partie de l'ensemble des pistes sur lesquelles un signal audio est enregistré et qui, dans l'affirmative, indiquent un numéro de piste (Nf) de la piste de tête de l'ensemble et un numéro de piste (Nn) de la piste immédiatement suivante de l'ensemble; et des données de numéro de piste correspondante qui indiquent un numéro de piste (Nc) d'une piste (VT) sur laquelle est enregistrée une trame de signal vidéo correspondant au signal audio qui est reproduit, et le support d'enregistrement (D) comportant également une piste de commande (CT) sur laquelle les données de code de commande (API) sont enregistrées;

(b) on reproduit (122) les données de code de commande (API) à partir de la piste de commande (CT);

(c) on mémorise (131) les données de code de commande (API) reproduites,ces données de code de commande comprenant les données d'adresse, les données de discrimination et les données de numéro de piste correspondante; et

(d) on visualise (132) les données de code de commande (API) mémorisées, et on commande sélectivement (133) une séquence de reproduction des signaux audio et vidéo qui sont enregistrés sur les pistes, conformément aux données de code de commande (API) qui sont visualisées.

11. Un support d'enregistrement tournant (D) comportant des pistes d'enregistrement sur lesquelles sont enregistrés à la fois un ensemble de trames de signaux vidéo et un ensemble de signaux audio, les signaux audio étant enregistrés sous la forme de données audio comprimées dans le temps avec lesquelles sont enregistrées des données de code de commande (API) indiquantla correspondance entre les signaux audio et les trames de signaux vidéo, le support d'enregistrement tournant (D) étant caractérisé en ce que :

ses pistes d'enregistrement sont disposées de façon mutuellement concentrique;

les trames de signaux vidéo et les signaux audio sont enregistrés de façon que chaque trame de signal vidéo soit enregistrée sur l'une respective des pistes (VT) et que chaque signal audio soit enregistré sur une piste ou un ensemble de pistes (AT) autres que celles sur lesquelles les trames de signaux vidéo sont enregistrées;

chaque piste (AT) sur laquelle est enregistré un signal audio ou une partie de celui-ci, est une piste sur laquelle le signal audio ou la partie de celui-ci est enregistré sous la forme de données audio comprimées dans le temps (AS) et sur laquelle les données de code de commande (API) sont également enregistrées;

les données de code de commande (API) comprennent : des données d'adresse qui indiquent un numéro de piste (Nt) et une adresse sur le support d'enregistrement tournant (D); des données de discrimination qui indiquent si une piste (AT) qui est reproduite est une piste qui fait partie d'un ensemble précité des pistes sur lesquelles un signal audio est enregistré et qui, dans l'affirmative, indiquent un numéro de piste (Nf) de la piste de tête de l'ensemble et un numéro de piste (Nn) de la piste immédiatement suivante de l'ensemble; et des données de numéro de piste correspondante qui indiquent un numéro de piste (Nc) d'une piste (VT) sur laquelle est enregistrée une trame de signal vidéo correspondant au signal audio qui est reproduit; et

le support d'enregistrement (D) comporte une piste de commande (CT) sur laquelle les données de code de commande (API) sont enregistrées.

## Ansprüche

1. Signalaufzeichnungsgerät zum Aufzeichnen sowohl einer Mehrzahl von Videosignalfeldern als auch einer Mehrzahl von Audiosignalen auf Aufzeichnungsspuren eines rotierenden Aufzeichnungsmediums (D) mit

   Mitteln (14, 21, 22, 23) zur Zeitkomprimierung der Audiosignale,

   Mitteln (32) zur Erzeugung von Steuerkodedaten (API), die die Korrespondenz zwischen den Audiosignalen und Videosignalfeldern anzeigen,

und Mitteln (16 usw.) zum Aufzeichnen der Steuerkodedaten (API) zusammen mit den zugehörigen zeitkomprimierten Audiodaten (AS),

dadurch gekennzeichnet, daß

(a) das Gerät in der Lage ist, die Videosignalfelder und die Audiosignale in der Weise auf einem Aufzeichnungsmedium in zueinander konzentrischen Aufzeichnungsspuren aufzuzeichnen, daß jedes Videosignalfeld in jeweils einer der Spuren (VT) aufgezeichnet wird und jedes Audiosignal in einer Spur oder in einer Mehrzahl von Spuren (AT) aufgezeichnet wird, die andere sind als diejenigen, in denen die Videosignalfelder aufgezeichnet werden,

(b) die Mittel (32), die zur Erzeugung der Steuerkodedaten (API) für die Steuerung einer Wiedergabesequenz von in den Spuren aufgezeichneten Audiosignalen dienen, die Erzeugung von Steuerkodedaten (API) bewirken, die folgende Daten beinhalten: Adressendaten, die eine Spurnummer (Nt) und Adresse auf dem rotierenden Aufzeichnungsmedium (D) angeben, Diskriminatordaten, die angeben, ob eine gerade wiedergegebene Spur (AT) eine solche ist, die Teil der genannten Mehrzahl von Spuren bildet, in denen ein Audiosignal aufgezeichnet ist, und, wenn dies der Fall ist, die Spurnummer (Nf) der vordersten Spur aus der genannten Mehrzahl von Spuren sowie die Spurnummer (Nn) der nächstfolgenden Spur aus der Mehrzahl von Spuren angeben, sowie korrespondierende Spurnummern-Daten, die die Spurnummer (Nc) einer Spur (VT) angeben, in der ein Videosignalfeld aufgezeichnet ist, das mit dem gerade wiedergegebenen Audiosignal korrespondiert,

(c) Tabellenspeichermittel (38) vorgesehen sind zur Speicherung der Steuerkodedaten (API) einschließlich der Adressendaten, der Diskriminatordaten und der korrespondierenden Spurnummerndaten,

(d) Mittel (16 usw.) vorgesehen sind zum Aufzeichnen der Steuerkodedaten (API) zusammen mit den zugehörigen zeitkomprimierten Audiosignalen (AS) in Abschnitten der jeweiligen Spuren (AT), in denen die Audiosignale aufgezeichnet werden, und

(e) Mittel vorgesehen sind zum Aufzeichnen der in den Tabellenspeichermitteln (38) gespeicherten Steuerkodedaten (API) in einer Steuerspur (CT) an einer vorbestimmten Stelle auf dem rotierenden Aufzeichnungsmedium (D).

2. Gerät nach Anspruch 1, bei dem die Mittel zum Aufzeichnen der Steuerkodedaten (API) die in den Tabellenspeichermitteln (38) gespeicherten Steuerkodedaten auslesen und in der Steuerspur (CT) aufzeichnen, wenn das Aufzeichnen des zeitkomprimierten Audiosignals und eines korrespondierenden Videosignalfeldes für eine gegebene Szene beendet ist.

3. Gerät nach Anspruch 1, bei dem die Mittel zum Aufzeichnen der Steuerkodedaten (API) die in den Tabellenspeichermitteln (38) gespeicherten Steuerkodedaten auslesen und in der Steuerspur (CT) aufzeichnen, wenn das Aufzeichnen des zeitkomprimierten Audiosignals und eines korrespondierenden Videosignalfeldes für eine gegebene Reihe von Szenen beendet ist.

4. Gerät nach Anspruch 2 oder 3, bei dem die in den Tabellenspeichermittel (38) gespeicherten Steuerkodedaten (API) ausgelesen und in der Steuerspur (CT) aufgezeichnet werden, bevor das rotierende Aufzeichnungsmedium (D) aus dem Aufzeichnungsgerät herausgenommen wird.

5. Gerät nach einem der vorhergehenden Ansprüche, bei dem die Mittel zur Zeitkomprimierung der Audiosignale eine Audiosignal-Speichereinrichtung (14) aufweisen, ferner Mittel (13) zur Eingabe von Audiodaten in die Audiosignal-Speichereinrichtung (14) in digitaler Form, einen Schreib/Lese-Adressenzähler (22) zur Steuerung der Audiosignal-Speichereinrichtung (14) sowie erste und zweite Taktsignalgeneratoren (21, 23) zur Erzeugung eines ersten bzw. eines zweiten Taktsignals und zur Zuführung dieser Taktsignale zu dem Schreib/Lese-Adressenzähler (22), wobei das erste Taktsignal einer ausgewählten Frequenz ($f_c$) entspricht, die wesentlich kleiner ist als die Frequenz ($f_o$) des zweiten Taktsignals, so daß der Schreib/Lese-Adressenzähler (22) Schreibadressen mit der ersten Frequenz ($f_c$) und Leseadressen mit der zweiten Frequenz ($f_o$) erzeugt, derart daß die digitalen Audiodaten (AS) in die Audiosignal-Speichereinrichtung (14) mit der ersten Taktsignalfrequenz ($f_c$) eingeschrieben und mit der höheren zweiten Taktsignalfrequenz ($f_o$) aus der Audiosignal-Speichereinrichtung (14) ausgelesen werden.

6. Gerät nach Anspruch 5, bei dem der zweite Taktsignalgenerator (23) das zweite Taktsignal mit einer Frequenz ($f_o$) erzeugt, die 640 mal so groß ist wie die Frequenz ($f_c$) des ersten Taktsignals.

7. Verfahren zum Aufzeichnen sowohl einer Mehrzahl von Videosignalfeldern als auch einer Mehrzahl von Audiosignalen in Aufzeichnungsspuren eines rotierenden Aufzeichnungsmediums (D), bei dem
die Audiosignale zeitkomprimiert werden,
Steuerkodedaten (API) erzeugt werden, die die Korespondenz zwischen den Audiosignalen und den Videosignalfeldern angeben und
die Steuerkodedaten (API) zusammen mit den zugehörigen zeitkomprimierten Audiodaten (AS) aufgezeichnet werden,
gekennzeichnet durch die Verfahrensschritte:
(a) Aufzeichnen der Videosignalfelder und der Audiosignale in der Weise, daß jedes Videosignalfeld in jeweils einer der Spuren (VT) aufgezeichnet wird und jedes Audiosignal in einer Spur oder in einer Mehrzahl von Spuren (AT) aufgezeichnet wird, die andere sind als diejenigen, in denen die Videosignalfelder aufgezeichnet werden,
(b) Erzeugen der Steuerkodedaten (API) zur Steuerung einer Wiedergabesequenz von in den Spuren aufgezeichneten Audiosignalen, wobei die Steuerkodedaten (API) folgende Daten enthalten: Adressendaten, die eine Spurnummer (Nt) und Adresse auf dem rotierenden Aufzeichnungsmedium (D) angeben, Diskriminatordaten, die angeben, ob eine gerade wiedergegebene Spur (AT) eine Spur ist, die Teil der genannten Mehrzahl von Spuren bildet, in denen ein Audiosignal aufgezeichnet ist, und, wenn dies zutrifft, die Spurnummer (Nf) der vordersten Spur aus der genannten Mehrzahl von Spuren sowie die Spurnummer (Nn) der nächstfolgenden Spur aus der Mehrzahl von Spuren angeben, sowie korrespondierende Spurnummern-Daten, die die Spurnummer (Nc) einer Spur (VT) angeben, in der ein Videosignalfeld aufgezeichnet ist, das mit dem gerade wiedergegebenen Audiosignal korrespondiert,
(c) Speichern der Steuerkodedaten (API) einschließlich der Adressendaten, der Diskriminatordaten und der korrespondierenden Spurnummerndaten,
(d) Aufzeichnen der Steuerkodedaten (API) zusammen mit den zugehörigen zeitkomprimierten Audiosignalen (AS) in Abschnitten der jeweiligen Spuren (AT), in denen die Audiosignalen aufgezeichnet werden, und
(e) Aufzeichnen der gespeicherten Steuerkodedaten (API) in einer Steuerspur (CT) auf dem rotierenden Aufzeichnungsmedium (D).

8. Verfahren nach Anspruch 7, bei dem der Verfahrenschritt des Aufzeichnens der Steuerkodedaten (API) das Auslesen der gespeicherten Steuerkodedaten beinhaltet und ihre Aufzeichnung in der Steuerspur (CT), wenn das Aufzeichnen des zeitkomprimierten Audiosignals und eines mit diesem korrespondierenden Videosignalfeldes für eine gegebene Szene beendet ist.

9. Signalwiedergabegerät zur Wiedergabe von Signalen von einem rotierenden Aufzeichnungsmedium (D) mit Aufzeichnungsspuren, in denen sowohl eine Mehrzahl von Videosignalfeldern als auch eine Mehrzahl von Audiosignalen aufgezeichnet sind, wobei die Audiosignale in Form von zeitkomprimierten Audiodaten (AS) aufgezeichnet sind und Steuerkodedaten (API) mitaufgezeichnet sind, die die Korrespondenz zwischen den Audiosignalen und den Videosignalfeldern angeben, mit Mitteln (113, 124, 126, 127) zur zeitlichen Dehnung der von dem rotierenden Aufzeichnungsmedium (D) ausgelesenen zeitkomprimierten Audiodaten (AS),
dadurch gekennzeichnet, daß

(a) das Gerät in der Lage ist, Signale von einem rotierenden Aufzeichnungsmedium (D) wiederzugeben, das konzentrisch zueinander angeordnete Aufzeichnungsspuren besitzt, in denen die Videosignalfelder und die Audiosignale in der Weise aufgezeichnet sind, daß jedes Videosignalfeld in jeweils einer der Spuren (VT) aufgezeichnet wird und jedes Audiosignal in einer Spur oder in einer Mehrzahl von Spuren (AT) aufgezeichnet wird, die andere sind als diejenigen, in denen die Videosignalfelder aufgezeichnet werden, wobei jede Spur (AT), in der ein Audiosignal oder ein Teil eines solchen aufgezeichnet ist, dieses Audiosignal bzw. den Teil eines solchen in Form zeitkomprimierter Audiodaten (AS) enthält und auch die Steuerkodedaten (API) in ihr aufgezeichnet sind, wobei wobei die Steuerkodedaten (API) folgende Daten enthalten: Adressendaten, die eine Spurnummer (Nt) und Adresse auf dem rotierenden Aufzeichnungsmedium (D) angeben, Diskriminatordaten, die angeben, ob eine gerade wiedergegebene Spur (AT) eine Spur ist, die Teil der genannten Mehrzahl von Spuren bildet, in denen ein Audiosignal aufgezeichnet ist, und, wenn dies zutrifft, die Spurnummer (Nf) der vordersten Spur aus der genannten Mehrzahl von Spuren sowie die Spurnummer (Nn) der nächstfolgenden Spur der Mehrzahl von Spuren angeben, sowie korrespondierende Spurnummern-Daten, die die Spurnummer (Nc) einer Spur (VT) angeben, in der ein Videosignalfeld aufgezeichnet ist, das zu dem gerade wiedergegebenen Audiosignal korrespondiert, und wobei das Aufzeichnungsmedium(D) ferner eine Steuerspur (CT) enthält, in der die Steuerkodedaten (API) aufgezeichnet sind,

(b) eine Dekodiereinrichtung (122) zur Wiedergabe der Steuerkodedaten (API) vorgesehen ist,

(c) Tabellenspeichermittel (131) vorgesehen sind zur Speicherung der von der Dekodiereinrichtung (122) wiedergegebenen Steuerkodedaten (API), wobei diese Steuerkodedaten (API) die genannten Adressendaten, die Diskriminatordaten und die entsprechenden Spurnummerndaten beinhalten,

(d) eine Anzeigeeinrichtung (132) zur Anzeige der in den Tabellenspeichermitteln (131) gespeicherten Steuerkodedaten vorgesehen ist und

(e) Mittel (133 usw.) vorgesehen sind zum selektiven Auslesen der Videoinformation und der zeitkomprimierten Audiodaten aus dem rotierenden Aufzeichnungsmedium (D) nach Maßgabe der angezeigten Steuerkodedaten.

10. Verfahren zur Wiedergabe von Signalen von einem rotierenden Aufzeichnungsmedium (D) mit Aufzeichnungsspuren, in denen sowohl eine Mehrzahl von Videosignalfeldern als auch eine Mehrzahl von Audiosignalen aufgezeichnet sind, wobei die Audiosignale in Form von zeitkomprimierten Audiodaten (AS) aufgezeichnet sind und Steuerkodedaten (API) mitaufgezeichnet sind, die die Korrespondenz zwischen den Audiosignalen und den Videosignalfeldern angeben, wobei das Verfahren die Zeitdehnung der reproduzierten zeitkomprimierten Audiodaten beinhaltet,
gekennzeichnet durch die Verfahrensschritte:

(a) Wiedergeben der Signale von einem rotierenden Aufzeichnungsmedium (D), das zueinander konzentrische Aufzeichnungsspuren besitzt, in denen die Videosignalfelder und die Audiosignale in der Weise aufgezeichnet sind, daß jedes Videosignalfeld in jeweils einer der Spuren (VT) aufgezeichnet wird und jedes Audiosignal in einer Spur oder in einer Mehrzahl von Spuren (AT) aufgezeichnet wird, die andere sind als diejenigen, in denen die Videosignalfelder aufgezeichnet werden, wobei jede Spur (AT), in der ein Audiosignal oder ein Teil eines solchen aufgezeichnet ist, dieses Audiosignal bzw. den Teil eines solchen in Form zeitkomprimierter Audiodaten (AS) enthält und auch die Steuerkodedaten (API) in ihr aufgezeichnet sind, wobei die Steuerkodedaten (API) folgende Daten enthalten:

Adressendaten, die eine Spurnummer (Nt) und Adresse auf dem rotierenden Aufzeichnungsmedium (D) angeben, Diskriminatordaten, die angeben, ob eine gerade wiedergegebene Spur (AT) eine Spur ist, die Teil der genannten Mehrzahl von Spuren bildet, in denen ein Audiosignal aufgezeichnet ist, und, wenn dies zutrifft, die Spurnummer (Nf) der vordersten Spur aus der genannten Mehrzahl von Spuren sowie die Spurnummer (Nn) der nächstfolgenden Spur der Mehrzahl von Spuren angeben, sowie entsprechende Spurnummern-Daten, die die Spurnummer (Nc) einer Spur (VT) angeben, in der ein Videosignalfeld aufgezeichnet ist, das mit dem gerade wiedergegebenen Audiosignal korrespondiert, und wobei das Aufzeichnungsmedium (D) ferner eine Steuerspur (CT) enthält, in der die Steuerkodedaten (API) aufgezeichnet sind,

(b) Wiedergeben (122) der Steuerkodedaten (API) von der Steuerspur (CT),

(c) Speichern (131) der reproduzierten Steuerkodedaten (API), wobei die Steuerkodedaten die genannten Adressendaten, die Diskriminatordaten und die entsprechenden Spurnummerndaten enthalten, und

(d) Anzeigen (132) der gespeicherten Steuerkodedaten (API) und selektives Steuern (133) einer Wiedergabesequenz der in der Spuren aufgezeichneten Audio- und Videosignalfeld entsprechend den angezeigten Steuerkodedaten (API).

11. Rotierendes Aufzeichnungsmedium (D) mit Aufzeichnungsspuren, in denen sowohl eine Mehrzahl von Videosignalfeldern als auch eine Mehrzahl von Audiosignalen aufgezeichnet sind, wobei die Audiosignale in Form von zeitkomprimierten Audiodaten aufgezeichnet sind und mit diesen Steuerkodedaten (API) aufgezeichnet sind, die die Korrespondenz zwischen den Audiosignalen und den Videosignalfeldern angeben, dadurch gekennzeichnet, daß die Aufzeichnungsspuren konzentrisch zueinander angeordnet sind, daß die Videosignalfelder und die Audiosignale in der Weise aufgezeichnet sind, daß jedes Videosignalfeld in einer der Spuren (VT) aufgezeichnet ist und jedes Audiosignal in einer oder einer Mehrzahl der Spuren (AT) aufgezeichnet ist, die andere sind als diejenigen, in denen die Videosignalfelder aufgezeichnet sind,

daß jede Spur (AT), in der ein Audiosignal und ein Teil eines solchen aufgezeichnet ist, das Audiosignal oder den Teil desselben in Form von zeitkomprimierten Audiodaten (AS) enthält und in ihr auch die Steuerkodedaten (API) aufgezeichnet sind,

daß die Steuerkodedaten (API) folgende Daten enthalten: Adressendaten, die eine Spurnummer (Nt) und Adresse auf dem rotierenden Aufzeichnungsmedium (D) angeben, Diskriminatordaten, die angeben, ob eine gerade wiedergegebene Spur (AT) eine Spur ist, die Teil der genannten Mehrzahl von Spuren bildet, in denen ein Audiosignal aufgezeichnet ist, und, wenn dies zutrifft, die Spurnummer (Nf) der vordersten Spur aus der genannten Mehrzahl von Spuren sowie die Spurnummer (Nn) der nächstfolgenden Spur der Mehrzahl von Spuren angeben, sowie entsprechende Spurnummern-Daten, die die Spurnummer (Nc) einer Spur (VT) angeben, in der ein Videosignalfeld aufgezeichnet ist, das mit dem gerade wiedergegebenen Audiosignal korrespondiert, und wobei das Aufzeichnungsmedium (D) ferner eine Steuerspur (CT) enthält, und

daß das Aufzeichnungsmedium (D) ferner eine Steuerspur (CT) aufweist, in der die Steuerkodedaten (API) aufgezeichnet sind.

## FIG.1

VIDEO SIGNAL ○──→ | RECORDING CIRCUIT | → | PREEMPHASIS CIRCUIT |

2 — RECORDING CIRCUIT
3 — PREEMPHASIS CIRCUIT
1 — VIDEO SIGNAL
4
5 — FREQUENCY MODULATING CIRCUIT

38 — TABLE MEMORY
35 — HEAD DRIVING CIRCUIT
36 — HEAD DRIVING ELECTRIC MOTOR

40 — REPRODUCING BLOCK
45 — INFORMATION SIGNAL SENSOR
31 — SYSTEM CONTROLLER
32 — INFORMATION SIGNAL GENERATOR
33 — ENCODER

VT
6 D CT
AT

API

11 AUDIO SIGNAL ○──→
12 — ENCODER
13 — A/D CONVERTER
14 — MEMORY
15 — D/A CONVERTER
16 ⊕
17 — PREEMPHASIS CIRCUIT

SID EID

24
G
M

22 — ADDRESS COUNTER
26 — IDENTIFICATION SIGNAL GENERATOR

21 — OSCILLATOR $f_c$
23 — OSCILLATOR $f_0$ ( = 640 $f_c$ )

25 — TIMING SIGNAL GENERATOR
27 — SHUTTER BUTTON ACTUATING SIGNAL

EP 0 223 423 B1

## FIG.2

SID

OVL

API

AS

EID

1 SECTOR

## FIG.3

D

$S_D$

$S_A$

AT

$S_C$

$S_B$

CT

# FIG.4 A

| Address | Track number Nt | AT | VT | Leading track number Nf | Next following track number Nn | Corresponding track number Nc |
|---|---|---|---|---|---|---|
| | $b_0$ ------- $b_5$ | $b_6$ | $b_7$ | $b_8$ ---------- $b_{13}$ | $b_{14}$ ---------- $b_{19}$ | $b_{20}$ ---------- $b_{25}$ |
| 0 | 5 | 0 | 1 | 0 | 0 | 0 |
| 1 | 6 | 0 | 1 | 7 | 0 | 7 |
| 2 | 7 | 1 | 0 | 7 | 7 | 6 |
| 3 | 10 | 1 | 0 | 10 | 11 | 0 |
| 4 | 11 | 1 | 0 | 10 | 13 | 12 |
| 5 | 13 | 1 | 0 | 10 | 13 | 0 |
| 6 | 12 | 0 | 1 | 10 | 0 | 11 |
| 7 | 8 | 0 | 1 | 9 | 0 | 9 |
| 8 | 9 | 1 | 0 | 9 | 9 | 8 |
| 9 | 2 | 1 | 0 | 2 | 3 | 0 |
| 10 | 3 | 1 | 0 | 2 | 4 | 0 |
| 11 | 4 | 1 | 0 | 2 | 4 | 1 |
| 12 | 1 | 0 | 1 | 2 | 0 | 4 |
| 47 | 48 | 0 | 0 | 0 | 0 | 0 |
| 48 | 49 | 0 | 0 | 0 | 0 | 0 |
| 49 | 50 | 0 | 0 | 0 | 0 | 0 |

# FIG.4B

| Address | Track number Nt<br>b0 ------ b5 | AT<br>b6 | VT<br>b7 | Leading track number Nf<br>b8 --------- b13 | Next following track number Nn<br>b14 ------------- b19 | Corresponding track number Nc<br>b20 ----------- b25 |
|---|---|---|---|---|---|---|
| 0 | 1 | 0 | 1 | 2 | 0 | 4 |
| 1 | 2 | 1 | 0 | 2 | 3 | 0 |
| 2 | 3 | 1 | 0 | 2 | 4 | 0 |
| 3 | 4 | 1 | 0 | 2 | 4 | 1 |
| 4 | 5 | 0 | 1 | 0 | 0 | 0 |
| 5 | 6 | 0 | 1 | 7 | 0 | 7 |
| 6 | 7 | 1 | 0 | 7 | 7 | 6 |
| 7 | 8 | 0 | 1 | 9 | 0 | 9 |
| 8 | 9 | 1 | 0 | 9 | 9 | 8 |
| 9 | 10 | 1 | 0 | 10 | 11 | 0 |
| 10 | 11 | 1 | 0 | 10 | 13 | 12 |
| 11 | 12 | 0 | 1 | 10 | 0 | 11 |
| 12 | 13 | 1 | 0 | 10 | 13 | 0 |
| | | | | | | |
| 47 | 48 | 0 | 0 | 0 | 0 | 0 |
| 48 | 49 | 0 | 0 | 0 | 0 | 0 |
| 49 | 50 | 0 | 0 | 0 | 0 | 0 |

## FIG.4C

| Address | Track number Nt<br>$b_0$ ----- $b_5$ | AT<br>$b_6$ | VT<br>$b_7$ | Leading track number Nf<br>$b_8$ -------- $b_{13}$ | Next following track number Nn<br>$b_{14}$ ----------- $b_{19}$ | Corresponding track number Nc<br>$b_{20}$ ----------- $b_{25}$ |
|---|---|---|---|---|---|---|
| 0 | 48 | 0 | 0 | 0 | 0 | 0 |
| 1 | 49 | 0 | 0 | 0 | 0 | 0 |
| 2 | 50 | 0 | 0 | 0 | 0 | 0 |
| 3 | 5 | 0 | 1 | 0 | 0 | 0 |
| 4 | 2 | 1 | 0 | 2 | 3 | 0 |
| 5 | 3 | 1 | 0 | 2 | 4 | 0 |
| 6 | 4 | 1 | 0 | 2 | 4 | 1 |
| 7 | 1 | 0 | 1 | 2 | 0 | 4 |
| 8 | 6 | 0 | 1 | 7 | 0 | 7 |
| 9 | 7 | 1 | 0 | 7 | 7 | 6 |
| 10 | 8 | 0 | 1 | 9 | 0 | 9 |
| 11 | 9 | 1 | 0 | 9 | 9 | 8 |
| 12 | 10 | 1 | 0 | 10 | 11 | 0 |
| 13 | 11 | 1 | 0 | 10 | 13 | 12 |
| 14 | 13 | 1 | 0 | 10 | 13 | 0 |
| 15 | 12 | 0 | 1 | 10 | 0 | 11 |

# FIG.5

| TRACK NUMBER | | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 · · · |

RECORDING TRACK: VT AT AT AT VT VT AT VT AT AT AT VT AT

Nc Nf Nt Nn

RECORDING SEQUENCE: 5  1  2  4  3  - - -

# FIG.6

50 SEGMENTS

CT

| SG$_0$ | SG$_1$ | SG$_2$ | | SG$_{48}$ | SG$_{49}$ |

NEXT FOLLOWING TRACK NUMBER Nn

CORRESPONDING TRACK NUMBER Nc

| | TRACK NUMBER Nt | A T | V T | | | | |

SYNCH

LEADING TRACK NUMBER Nf

# FIG.7

41  42  43  44

FREQUENCY DEMODULATING CIRCUIT → DEEMPHASIS CIRCUIT → DECODER → TO INFORMATION SIGNAL SENSOR 45

40

24

# FIG.8